# EUROPEAN PATENT APPLICATION

(11) **EP 1 006 442 A2**
(43) Date of publication of application: **07.06.2000**
(21) Application number: 99122477.5
(22) Date of filing: 11.11.1999
(51) Int. Cl.: G06F 9/445, G06F 9/44

(54) **Method and system for programming applications for use with devices having a reduced support of high-level programming concepts**

(30) Priority: 30.11.1998 EP 98122659
(71) Applicant: International Business Machines Corporation, Armonk, NY 10504 (US)
(72) Inventor: Merk, Lothar, 71093 Weil im Schönbuch (DE); Stober, Lothar, 71032 Böblingen (DE)
(74) Representative: Teufel, Fritz, Dipl.-Phys.

(57) **Abstract**

In order to make application as independent as possible of a particular SmartCard abstract interfaces representing data types of a plurality of SmartCards are used for realizing SmartCard access operations. These data types, referred to herein after as "items" can be amongst others primitive JAVA types, arrays, structures, cryptographic keys, counters or, complex, self defined object types, as well. The interfaces each determine the functionality of the programming objects and are used for integration of the plurality of potential SmartCards into the application by visual programming: the interfaces representing the SmartCard objects are associated with objects of the application by event control. To the same time, that interfaces hide details specific to SmartCards, such as attributes as file paths, offsets, addresses or similar things, which are not relevant for the programming of the application itself or which are dependent on the SmartCard type. The actual implementation of that interfaces for the current SmartCard types is done, however, specific for each card and independently of the development of the application and is bound dynamically and automatically by an item factory at runtime, dependent and specific for each of the applied SmartCards. By doing this, all card specific operations are encapsulated and one and the same application is compliant to a plurality of different SmartCard types, including JAVA cards or the commonly used file system-oriented SmartCards, as well.

## Description

### 1. BACKGROUND OF THE INVENTION

### 1.1 FIELD OF THE INVENTION

The present invention relates to programming and operation of applications for use with devices having a reduced support of high-level programming concepts, particularly for use with SmartCards, it relates in particular to improvements for programming such applications.

### 1.2 DESCRIPTION AND DISADVANTAGES OF PRIOR ART

Since a chip card was introduced for public telephones in France 1984, the chip card business has been rapidly growing concerning economic and technological aspects. Until the year 2000 an annual growth of 25 percent is expected. The German Geldkarte has been issued over 40 million times. Former simple storage chipboards evolved to modern smart cards with their own microprocessor, own operation system and over 32 Kbytes free storage for applications. Very reliable authentication, electronic signature and cryptography are tasks where smart cards are superior to traditional technologies like magnetic stripe cards. The integrated processor allows smart cards to operate independently and not influenced by the environment: Sensible data, e.g. a secret key, never has to leave the card. Smart cards are able to execute cryptographic algorithms or check passwords locally before releasing stored data. Electronic cash transactions can be performed this way without an expensive online connection to host systems. This is why smart cards play an important role especially in electronic business and banking.
Another important area of applications are consumer electronics: Mobiles and set-top-boxes already adopt smart card technology. Finally, in some years there will be a new generation of small electronic devices, i.e. reduced resources computer device which are mass produced low cost devices for a variety of daily-life purposes each holding a processing chip and some program memory. At least one major obstacle impedes the propagation of such devices and in particular of smart cards and their application development:

Today's smart card operating systems and terminal software are proprietary solutions of card and terminal manufacturers. Cards belonging to different manufacturers have distinct operation systems and distinct instruction sets. Further, the APIs of different terminals are distinct. Some have more comfortable, e.g. a SQL-interface, some have less comfortable facilities to store data on a card. Most often explicit conversions are thus required when a card supports only primitive data types like byte arrays.

This results in a dependency of smart card applications on specific card types and requires big efforts when, for example, adopting additional cards for an already existing application. Developing a large scale smart card application which involves many different smart card manufacturers and users is quite difficult under this circumstances.

In order to handle this problem, two different standardization processes, PCSC and OpenCard Framework, begin to come up both defining a card independent and terminal independent application programming interface (API) in order to achieve interoperability between such components of SmartCard systems. However, they only support primitive data types on cards instead of objects in an object-oriented sense..

Usage of primitive data types implies that application data being of quite complex nature when derived from higher object-oriented programming languages like e.g. JAVA have to be converted explicitly before storing them on a SmartCard - in a specific way for each card. Thus, the data type specific access methods also have to be implemented separately what turns out as very expensive and unpleasant work.

For a better understanding of the above said an exemplary application is given which uses the following data objects being placed on a fictive SmartCard:
Name, a character string of an unlimited length,
Year of birth, integer,
List of all counts, is a list of character strings, each having an unlimited length,
Number of accesses to the SmartCard, being a counter.

With increasing complexity of data types said procedure illustrated above is getting more and more expensive as e.g., a character string like a name can certainly be converted by simply performing a JAVA method, a list of all accounts, however, requires already some programming. Apart of that the card specific parts of an application have to be tailored for each specific card type.

This, however, hardens the establishment of new heterogeneous solutions in which a plurality of different manufacturers and users could participate actively.

At the one hand standards like Open Card Framework or PCSC offer an API for development of SmartCard access procedures which is independent from the manufacturer. But on the other hand the complex standards require large time for getting into the subject and require programming experience in order to integrate the particular methods into the application. Further, data types more complex than byte arrays are not supported by said standards and can thus not be used directly in a card independent SmartCard application.
Furthermore, there are no card type independent access methods for the data types commonly used in higher level programming languages. As such, data and methods are separated from each other which stands in clear contrast to the object-oriented paradigm. Thus, an adequate straight forward and contiguous software development is not possible.

### 1.3 OBJECTS OF THE INVENTION

Regarding increasing complexity of smart card solutions it is therefore an important object of the present invention to make application development easier.

It is another object of the present invention to make application development as easy as possible.

### 2. SUMMARY AND ADVANTAGES OF THE INVENTION

These objects of the invention are achieved by the features stated in enclosed independent claims. Further advantageous arrangements and embodiments of the invention are set forth in the respective subclaims.

For sake of improved clarity any citation of the expression 'object' is deemed to refer to object-oriented programming (OOP) except such citations as done shortly above which are typically used in patent field. Nevertheless, such OOP-objects are frequently referred to as 'programming objects'. Further, citations of 'method(s)' associated with OOP-techniques are sometimes supplemented by 'programming' in order to distinguish them from the terminus technicus of patent claim category.

The present invention takes use of the facilities provided by visual programming techniques and selects some features of that techniques in order to facilitate and to accelerate the object oriented development of SmartCard applications in JAVA. In order to make applications as independent as possible of a particular SmartCard abstract interfaces representing data types of a plurality of SmartCards are used for realizing SmartCard access operations. That data types, referred to herein after as "items" can be amongst others primitive JAVA types, arrays, structures, cryptographic keys, counters or, complex, self defined object types, as well. The interfaces each determine the functionality of the programming objects and are used for integration of the plurality of potential SmartCards into the application by visual programming: the interfaces representing the SmartCard objects are associated with objects of the application by event control. To the same time, that interfaces hide details specific to SmartCards, such as attributes as file paths, offsets, addresses or similar things, which are not relevant for the programming of the application itself or which are dependent of the SmartCard type. The actual implementation of that interfaces for the current SmartCard types is done, however, specific for each card and independently of the development of the application and is bound dynamically and automatically by an item factory at runtime, dependent and specific for each of the applied SmartCards. By doing this, all card specific operations are encapsulated and one and the same application is compliant to a plurality of different SmartCard types, including JAVA cards or the commonly used file system-oriented SmartCards, as well.

The method of the present invention with the characteristics of claim 1 has the advantage, in relation to the method sketched out in the discussion of prior art technique that it closes a gap between the OpenCard PSC API and visual programming techniques. The application designer is provided with handsome components with which he is able to map complex data types of his application onto any SmartCard without having to take care of technical details, know how and SmartCard specific particularities. The development of SmartCard applications and solutions becomes clearly more simple and more efficient by making the application engineering independent of SmartCards and terminal constraints.

Caused by the quasi-intuitive integration of SmardCard access operations into the application logic the application designer needs less skill and consequently, applications can be developed in shorter time intervals. Apart of that, the application designer is encouraged to begin with SmardCard application development as detailed knowledge on SmartCards is not required for that.

A plurality of different file system based SmartCards as well as JavaCards can be included into an application to be programmed, without the application designer being required to adapt the application to a plurality of SmartCards.

The support of complex data types on SmartCards provides for much more flexible and transparent solutions, compared to the prior art conversions, necessary for supporting the primitive data types of file system oriented SmartCards.

### 3. BRIEF DESCRIPTION OF THE DRAWINGS

The present invention is illustrated by way of example and is not limited by the shape of the Figures of the accompanying drawings in which:
- Fig. 1: shows a basic logical schema describing generally the main parts involved in a SmartCard application software development and disclosing some features of the inventional method,
- Fig. 2: shows a schematic representation of high-level SmartCard objects at design time at left hand side and at runtime - right hand side, and respective involvement into application development,
- Fig. 3: shows an exemplary collection of data objects and some exemplary access methods to be performed thereon which can be provided in form of high-level items for a plurality of SmartCards,
- Fig. 4: shows the principle of visual programming in which high-level item interfaces are associated at design time with a user interface in order to implement the application logic,
- Fig. 5: shows the instantiation of SmartCard specific item implementations at runtime,
- Fig. 6: shows a schematic sketch illustrating people occupied with prior art SmartCard application development,
- Fig. 7: shows a schematic sketch according to Fig. 6 illustrating the advantageous feature of increased programming efficiency by staff specialization and reusability of item implementations due to the inventional method,
- Fig. 8: shows a schematic sketch according to Fig. 7 illustrating multiple usage of application development by a plurality of card type specific item-implementations.

### 4. DESCRIPTION OF THE PREFERRED EMBODIMENT

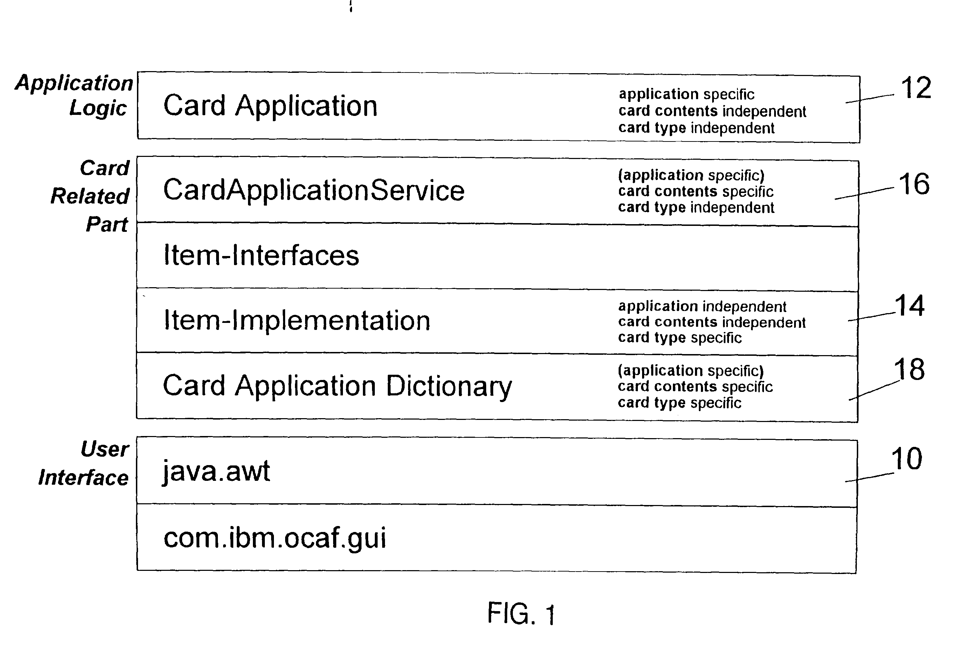

With general reference to the Figures and with special reference now to Fig. 1 the essential steps of a preferred embodiment of the method according to the present invention are explained in more detail. Hereby, a preferred reference is made to JAVA programming language which can be advantageously involved in the inventional method.

Generally, there are usually three tasks when developing a SmartCard host application: designing the user interface 10, implementing the application logic 12 and creating the card related part 14. This separation can be found in the architecture, which the Application Framework predefines for all applications. For each of these tasks the method according to the invention provides advantageously a number of components as JavaBeans or Java interfaces. They can be assembled in a visual programming environment. There are components which are application independent and components which are customized for a specific application context. To avoid a manual programming of these specific components, a tool for automatic generation of customized Beans can optionally be made part of the Application Framework.

Each application needs a specific JavaBean, which lists all objects on a matching smart card. Said Bean is inherited from a class CardApplicationService 16, provided by the framework. This class is application specific but card type independent. It represents the objects on the card which can be accessed by the application and their methods. Another application specific Bean is the CardApplicationDictionary 18, defining particular card type specific information about the objects on the card.

Said dictionary 18 can advantageously be structured like a table and contains for each application programming object, i.e. the parameters needed to select the proper parameter setting when implementing the high-level item on a particular SmartCard. As such for a file system-oriented card file name and addresses can be addressed as an table entry, for a JAVACard a respective applet name.

To make programmers life easier, a programming environment using the method according to the present invention contains a layout editor which generates these application specific components from a high-level description.

The interaction between user and application logic is defined in the user interface 10. In a visual programming environment almost the entire application logic can be implemented by connecting events of the user interface with programming methods of the card related components and vice versa.

For more complex applications more sophisticated logic can be coded in the card application component 12 derived from CardApplication. The current state of an application can be distributed from this Bean and used by other listeners.

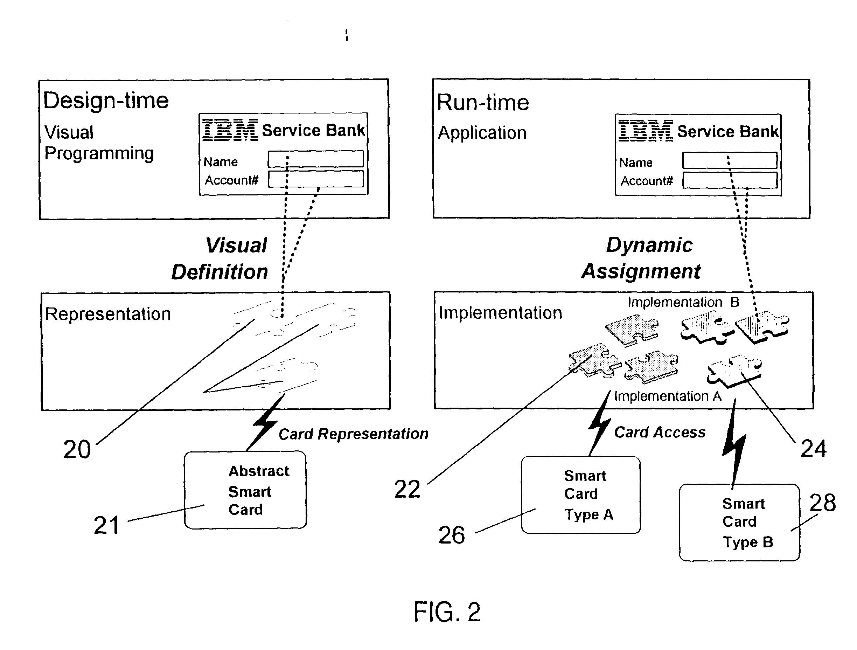

With reference to Fig. 2 a very important feature of the present invention is to work with high-level data objects further referred to as well as high-level item 20 during design-time.

Said high-level objects 20 form the universal part of an interface formed between host application and SmartCard application. On host application side such high-level items describe each object's attributes and functionality for (later) run-time usage by said device application. Thus, an abstract SmartCard 21 is addressed by the application programmer which actually does not exist but represents a plurality of different SmartCards from different manufacturers.

At runtime these high-level items are replaced with suitable real implementations 22, 24 depending on the used type of smart card, here SmartCards 26, 28, what is described later in more detail. Said replacement procedure forms the SmartCard specific part of said interface.

This feature enables application independence from the used card type and helps the application programmer to concentrate on important issues of his specific application instead of spending time on converting his application data into common primitive types normally supported by smart cards - usually byte arrays.

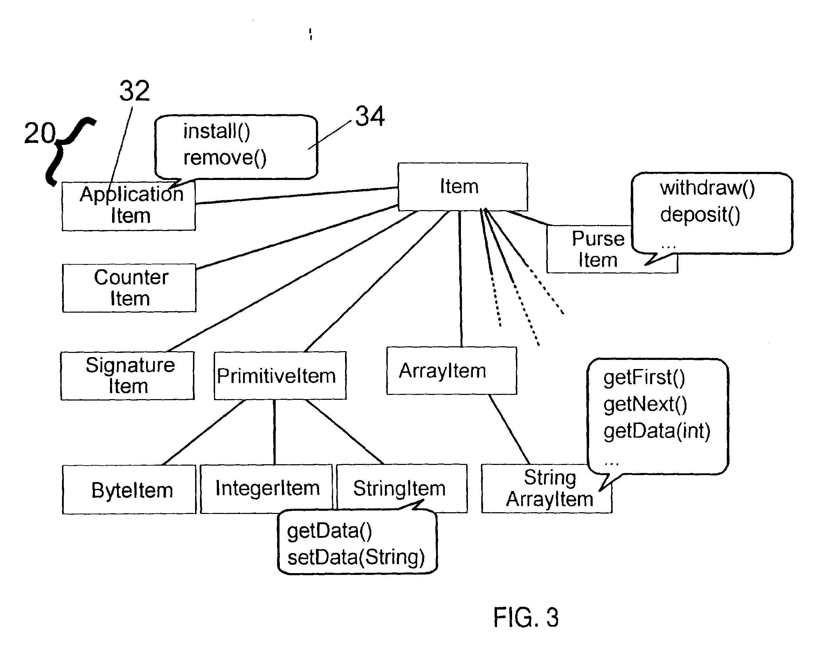

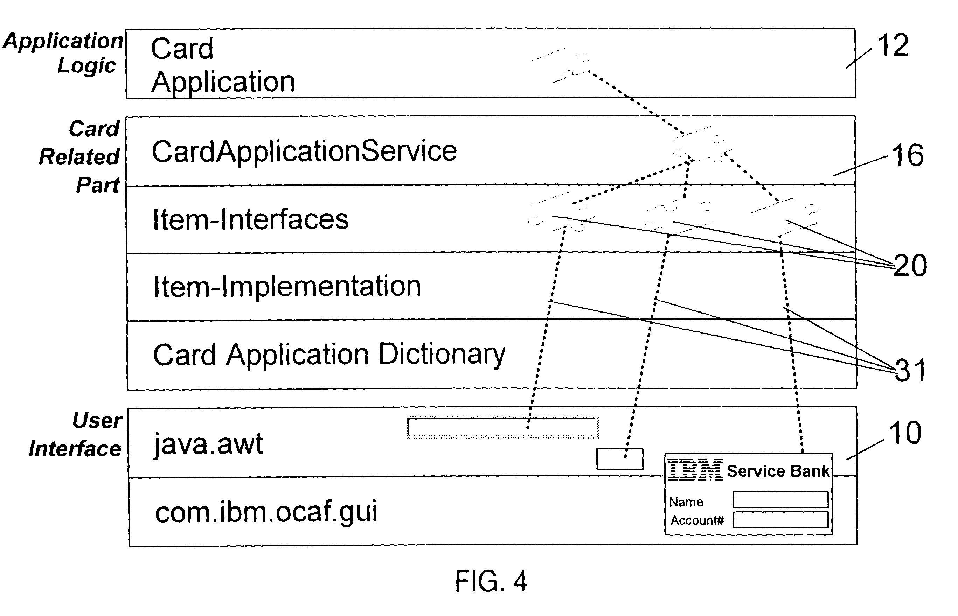

With reference to **Fig. 3 and 4** further aspects of said interface forming are described. The application framework view depicted symbolically in Fig. 4 provides for each supported item type the item interface 20, which can be used to represent objects on said generic card 21. These items can be primitive Java types, arrays, structures or cryptographic keys and counters. They are accessed via said user-interface 10 as is indicated by the connection lines. The interfaces 20 each comprise data or items 32 and methods 34 and thus describe the methods to be performed with the respective item, e.g. methods to access or modify the items. The high-level items 20 or interfaces can be used as a facade for visual programming of smart card access: They represent real objects of any compliant smart card. Thus, item-Interfaces hide all card specific details, which are not of interest for the application programmer. At this point it is not necessary to care, how the abstract item will be implemented for performing card access to a real smart card.

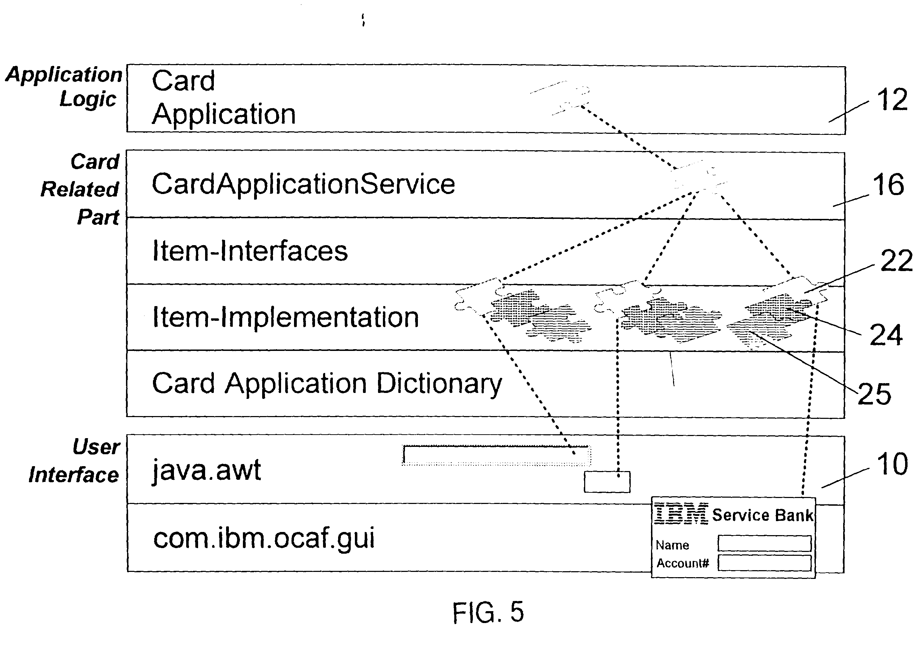

With reference to **Fig. 5** which concerns the application framework view as in Fig. 4 each defined item interface 20 needs an implementation 22, 24, 25 for each specific card type, which maps the high-level objects into the primitive data types supported by the used card. Since all card specific operations like address management, file names, card architecture data are encapsulated in item implementations, the same application can work with multiple cards. The item implementations 22, 24, 25 are application independent and have to be provided only once for each card type. As such they can have a multiple usage by a plurality of different cards, particularly when multiple applications are implemented on a single card.

In the exemplary application mentioned early above the use of the above described method would yield:
Name is a string item,
Year of birth is an integer item,
List of all counts is a StringArrayItem,
Number of card accesses is a CounterItem.

With reference back to Fig. 3 the item interfaces define the methods the user is provided with. For example, a getFirst() and a getLast()-method is defined for the StringArrayItem, an increase() and a decrease() method is defined for the CounterItem. With the help of these methods the SmartCard accesses of the above said exemplary application are implemented.

The implementation of the particular item interfaces 20 and by that the implementation of the particular methods 34 has to be done only once for each SmartCard type and can then be used for a plurality of different applications. For example, in an implementation for IBM MFC SmartCards a StringItemArray can be implemented by a RecordFile. That getFirst()-method has to read out the first record and than to convert the read ASCII characters into a string, which is returned to the application. An implementation of the increase()-method of a counter item could, for example, consist of reading a byte in a file, increasing the value by one and storing back the new value. Depending of the particular SmartCard type the implementation can advantageously take use of SmartCard specific counter-functionality, as it is the case, e.g. with the MFC 4.0 SmartCard.

With reference again to Fig. 4 a high-level item interface 20 for a data field consisting of strings could be constructed, for example, as follows:

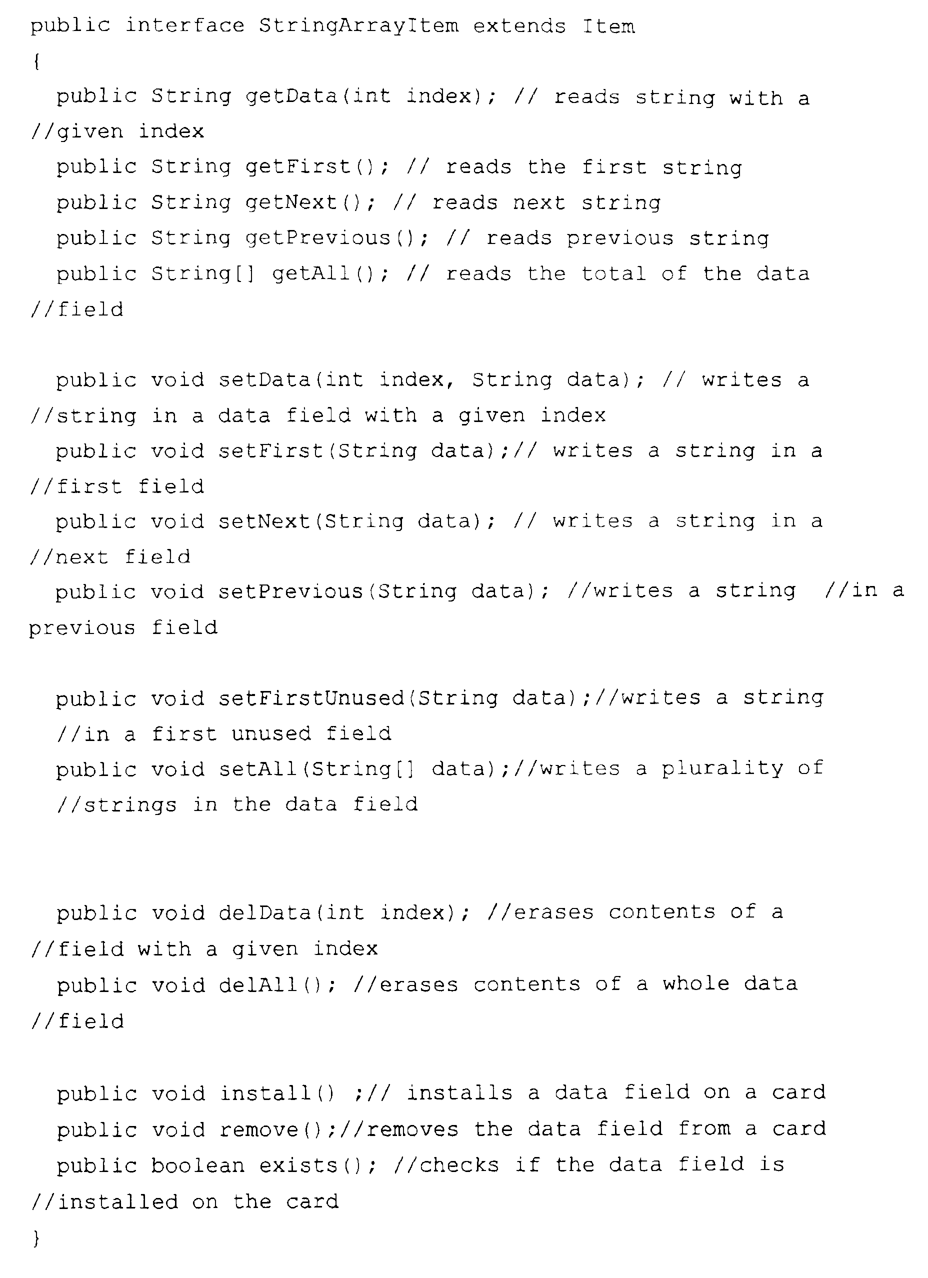

With reference again to Fig. 5 the respective implementation of the method for filesystem-oriented SmartCards could be constructed, as follows:

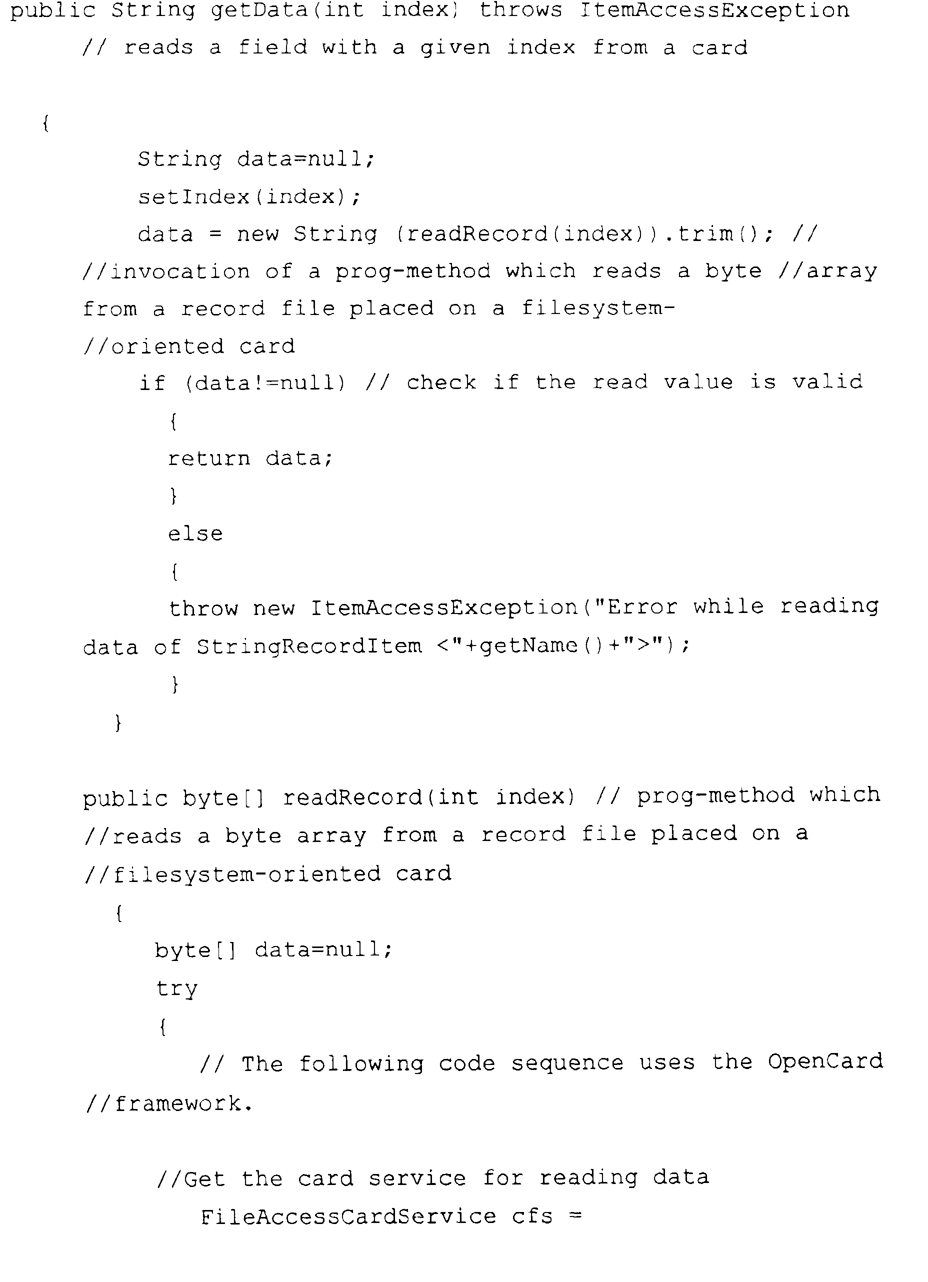

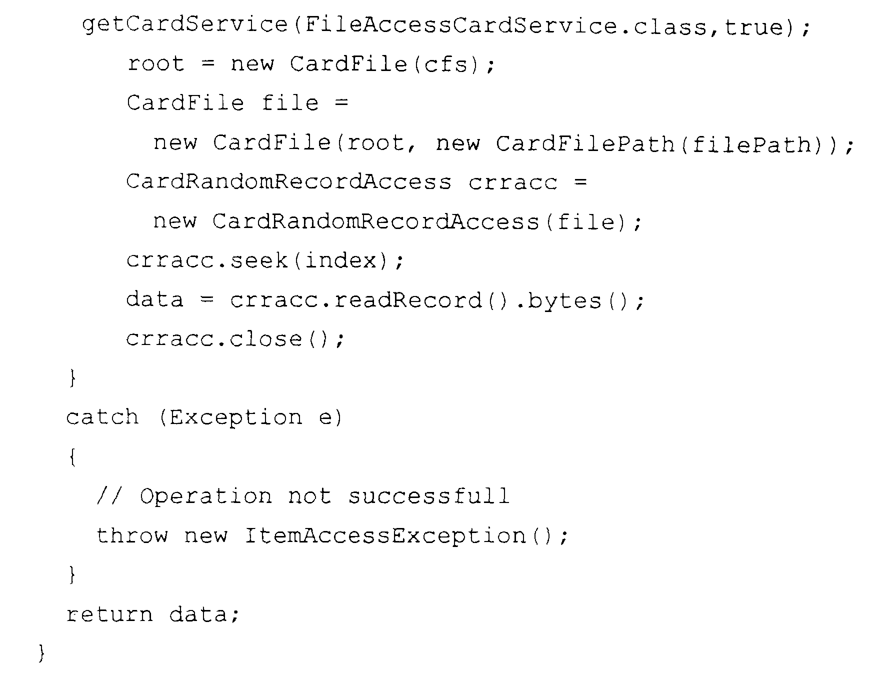

The instantiation of the respective item implementation at runtime can be outlined as follows:

First, the selection of the particular item implementation 22, 24, 25 can be done in different ways. In a preferred embodiment of the implementation of the present invention this is performed as follows:

First, it is provided a JavaBean "CardApplicationService" which implements the following algorithm:

As soon as a SmartCard is fed into a SmartCard terminal the CardApplicationService receives a particular event, called "CardInsertedEvent". For doing that the Open Card Framework application programming interface is used with the help of which such events can be generated independently of the terminal.

Said CardApplicationService prepares the SmartCard fed into the terminal by selecting the proper implementation which is specific for the SmartCard type and for all item interfaces used by the SmartCard user, and by generating a specific instantiation. This selection procedure is described in more detail down below.

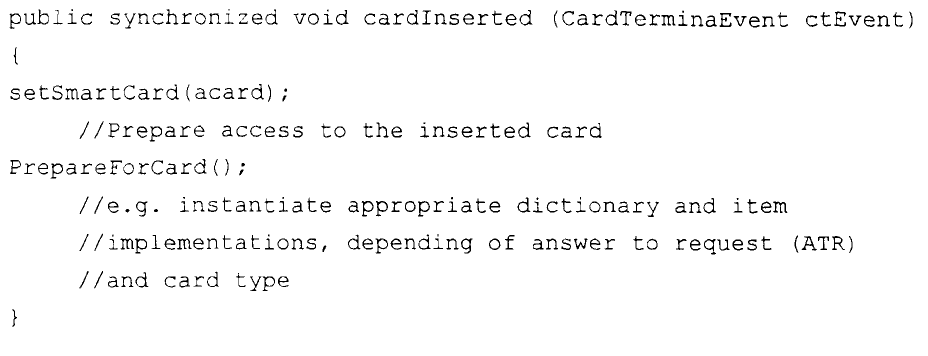

The above described method is defined in the "CardApplicationService"-Bean as well. The Bean checks the SmartCard type. In order to do that, a plurality of procedures can be used:

The so called ATR (Answer To Reset) of the SmartCard can be checked and the mapping between ATR and SmartCard type can be performed by selecting the proper SmartCard type from a predetermined table.

Alternatively, the procedures of the OpenCard Framework (OCF) application interface can be used in order to determine the SmartCard type. This however works only with SmartCards, being supported by OCF.

When the type of the SmartCard is defined the CardApplicationService loads a "CardApplicationDictionary" specific for this SmartCard type, e.g. with the help of a further class or in form of a configuration file.

Said dictionary comprises essential information concerning the initialisation of the card specific item implementations 22, 24, 25. Depending of the specific SmartCard type, determined by, e.g. ATR check, the following information required for the instantiation is read per item from the card specific 'CardApplicationDictionary':
- name of the implementation class, and
- several parameter as, for example, file size, file path, access rights,...

The list of the parameters depends on the item type - see Fig. 3-and of the SmartCard type, e.g., if file system oriented card or JAVA card, etc.

For each SmartCard type an own dictionary is required.

With this information all item implementations are instantiated subsequently.

The following commented code is given additionally for a more complete understanding of the above mentioned item implementation.

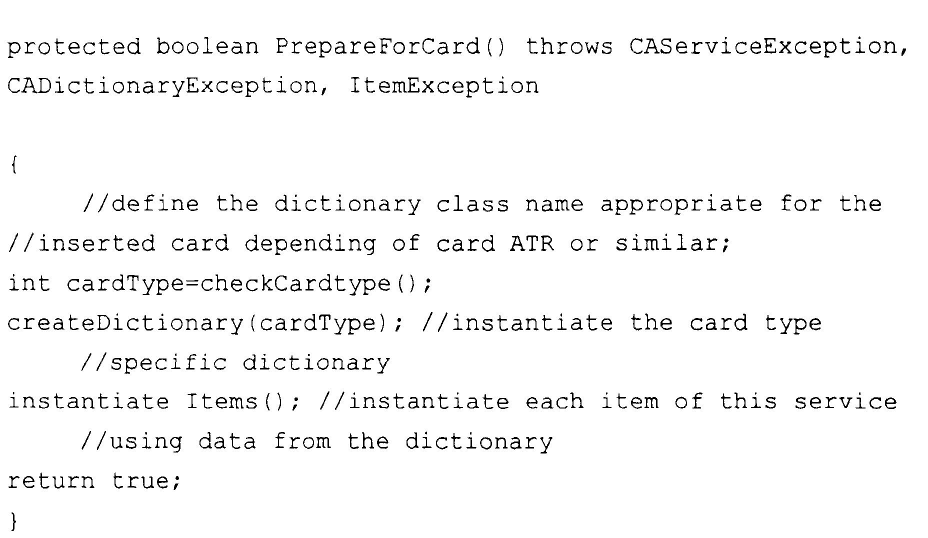

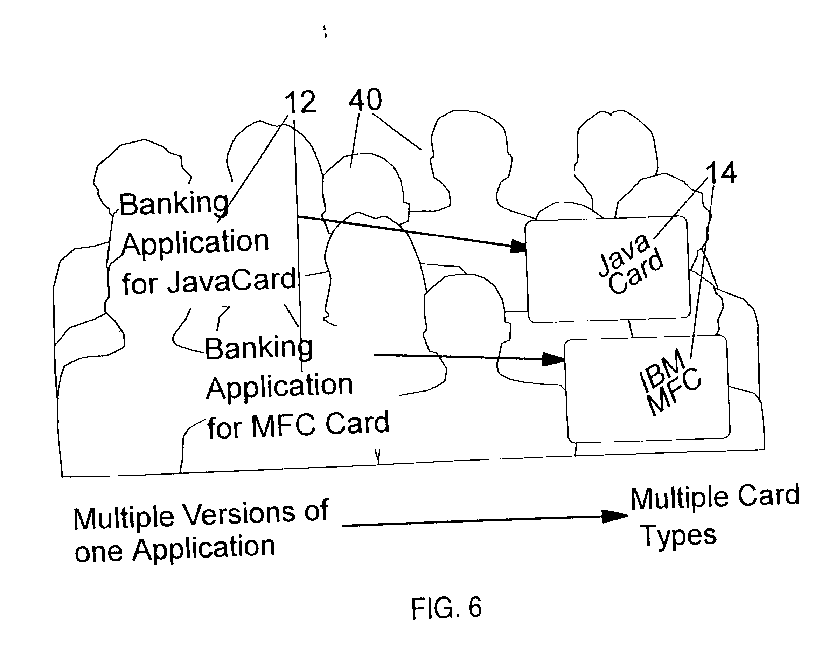

The advantageous effects of the universal interface created with applying the inventional method on the situation of application developers is depicted in figs. 6,7 and 8.

In Fig. 6 prior art situation is described in which a SmartCard application developer has to be skilled in both, the application logic 12 of the respective business processes, and in SmartCard filesystem architecture because he has to implement card specific, proprietary protocols for card accesses. Thus, a deeper understanding of corresponding read-, write- operations required for filesystem management on SmartCards is required in parallel to his skill on application logic itself. Consequently, application development is expensive and will last long time.

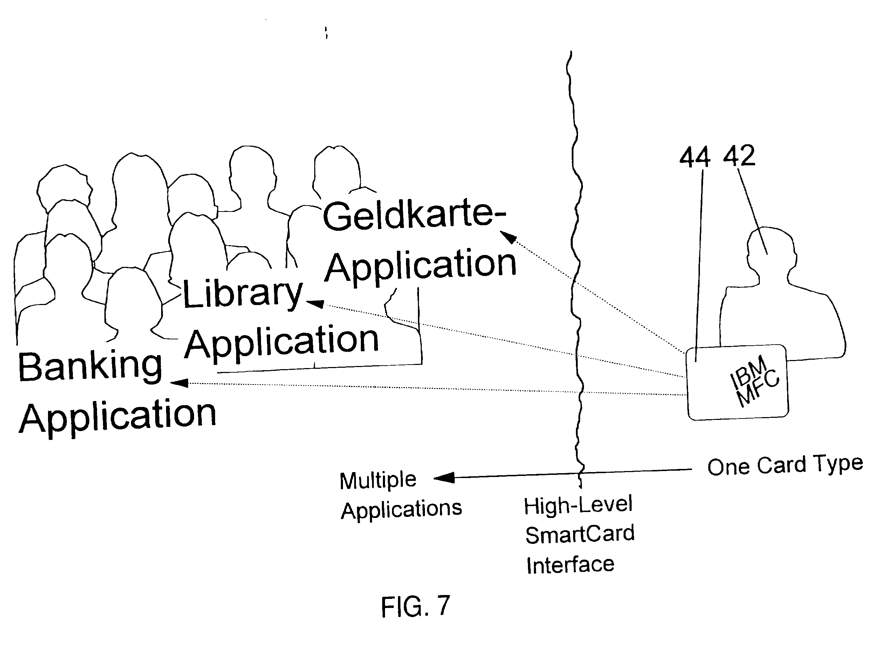

In Fig. 7 there is only one person 42 depicted skilled in SmartCard file system management. Said person can accumulate his work and can create a library full of item implementations specific for his 'own'SmartCard - here the IBM MFC Card. He does not need to know anything on any application logic because a plurality of developers 46, 47, 48 from different applications can use the library in order to manage their required SmartCard accesses.

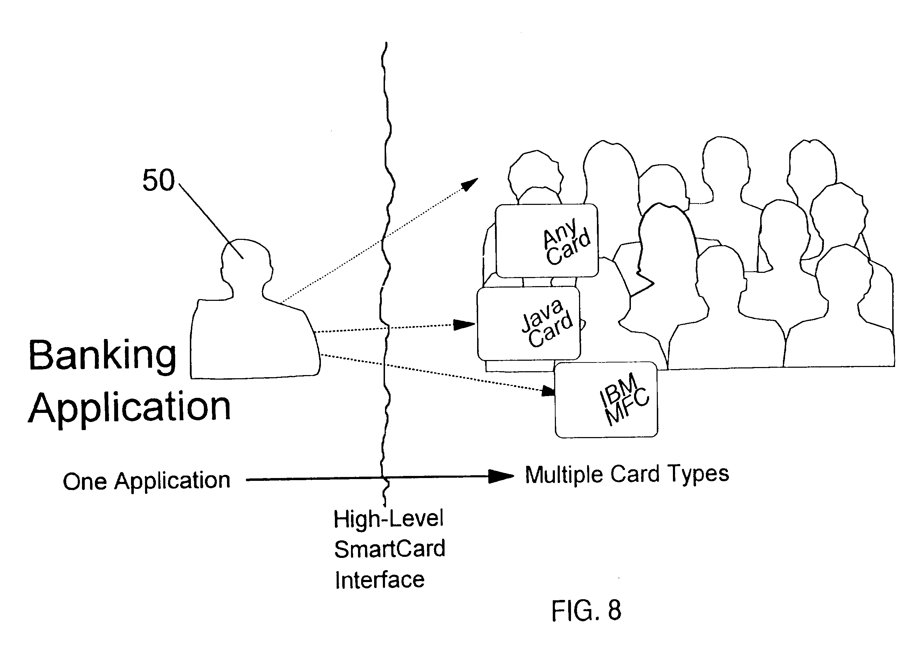

In Fig. 8 on the other hand there is only one person 50 competent for a particular (e.g. banking) application development. His work, a single application, becomes universal and card independent in usage for a plurality of SmardCard programmers. They are thus able to use the universal high-level items 20 defined by the interfaces for their individual job to accommodate the file accesses on their specific card.

Instead of performing a dynamic item implementation at application run time a configuration file or a hard coded adaptation could be performed also in order to convert the high-level items into data structures applicable on cards. This, however is not that comfortable because it requires more program maintenance.

In the foregoing specification the invention has been described with reference to a specific exemplary embodiment thereof. It will, however, be evident that various modifications and changes may be made thereto without departing from the broader spirit and scope of the invention as set forth in the appended claims. The specification and drawings are accordingly to be regarded as illustrative rather than in a restrictive sense.

| LIST OF REFERENCE SIGNS | |
|---|---|
| 10 | user interface |
| 12 | (host) application logic |
| 14 | card related application |
| 16 | CardApplicationService class |
| 18 | CardApplicationDictionary class |
| 20 | high-level item |
| 21 | abstract SmartCard, device |
| 22,24,25 | item implementations |
| 26,28 | SmartCards |
| 31 | connection line |
| 32, | data item |
| 34 | method |
| 40 | SmartCard application developer |
| 42 | SmartCard specialist |
| 44 | IBM MFC card |
| 46,47,48,50 | application developers |

## Claims

1. A method for creating software applications for use with devices (26,28) having a reduced support of high-level programming concepts wherein the application's programming objects are associated with both, an application (14) implemented on such device (26,28) and a host application (12) running on a host computer to be connected at least logically to said device at application run-time, the method comprising a step of
using an interface between host application (12) and device application (14), said interface being associated with said programming objects comprising programming methods (34) being able to be performed on the attributes (32) associated with said programming objects,
the method being characterized by comprising the step of
establishing in said interface on host application side for each programming object a high-level item (20) describing said object's attributes (32) and functionality (34) for run-time usage by said device application (14).

2. A method according to claim 1 comprising the step of
providing on device (26,28) side in said interface for a specific device for each programming object a counterpart item (22,24,25) adapted to said high-level item (20) for dynamic item implementation at application run time in order to exchange said object's inherent application data (32) between both sides.

3. The method according to the preceding claim, characterized by said device (26,28) being a SmartCard.

4. The method according to the preceding claim, characterized by
said high-level items (20) are allowed to be arranged in a nested way.

5. The method according to the preceding claim, characterized by the step of
using a library of card type specific item implementations (22,24,25) for usage by a plurality of applications (12).

6. The method according to the preceding claim, characterized by the step of
using a dictionary maintaining a plurality of location parameters related to a plurality of different SmartCards and objects for efficient item implementation.

7. An application development system for creating software applications for use with devices (26,28) having a reduced support of high-level programming concepts wherein the application's programming objects are associated with both, an application (14) implemented on such device and a host application (12) running on a host computer to be connected at least logically to said device at application run-time, the system comprising means for
providing an interface between host application (12) and device application (14), said interface being associated with said programming objects and comprising programming methods (34) being able to be performed on the attributes (32) associated with said programming objects,
the system being characterized by comprising means for
establishing in said interface on host application side for each programming object a high-level item (20) describing said object's attributes and functionality for run-time usage by said device application (14).

8. A system according to claim 7 comprising means for
providing on device side in said interface for a specific device for each programming object a counterpart item (22,24,25) adapted to said high-level item (20) for dynamic item implementation at application run time in order to exchange said object's inherent application data (32) between both sides.

9. The system according to the preceding claim, characterized by said device (26,28)being a SmartCard.

10. The system according to the preceding claim, characterized by
said high-level items (20) being allowed to be arranged in a nested way.

11. The system according to the preceding claim, characterized by having means for
using a library of card type specific item implementations (22,24,25) for usage by a plurality of applications (12).

12. The system according to the preceding claim, characterized by means for
using a dictionary maintaining a plurality of location parameters related to a plurality of different SmartCards (26,28) and objects for efficient item implementations.

13. A computing device (26, 28) having a reduced support of high-level programming concepts in which device an application (14) is implemented using said interface created with characterizing features of the method according to one of the claims 1 to 6.
